# EUROPÄISCHE PATENTSCHRIFT

(11) **EP 1 762 449 B1**
(45) Veröffentlichungstag und Bekanntmachung des Hinweises auf die Patenterteilung: **23.08.2017**
(21) Anmeldenummer: 06017843.1
(22) Anmeldetag: 26.08.2006
(51) Int. Cl.: B60T 17/04, B60R 11/00, F16L 3/02

(54) **Leitungshalter**
Conduit holder
Support pour conduits

(30) Priorität: 03.09.2005 DE 102005041918
(43) Veröffentlichungstag der Anmeldung: 14.03.2007
(73) Patentinhaber: MAN Truck & Bus Österreich AG, 4400 Steyr (AT)
(72) Erfinder: Mitterauer, Thomas, 4523 Neuzeug (AT)
(74) Vertreter: v. Bezold & Partner Patentanwälte - PartG mbB

(56) Entgegenhaltungen:
- EP-A1- 1 524 463
- DE-A1- 10 118 205
- DE-A1- 10 131 950
- DE-A1- 19 714 212
- DE-U1- 29 814 417
- US-B1- 6 830 075

## Beschreibung

Die Erfindung betrifft die Leitungsführung einer elastischen Leitung unterhalb eines Nutzfahrzeugaufbaus, der an einem zwei Längsträger aufweisenden Fahrzeugrahmen befestigt ist, wobei an den Längsträgern im Bereich unterhalb des Nutzfahrzeugaufbaus jeweils ein Federelement pro Fahrzeugseite vorgesehen ist und die elastische Leitung aus einem Bereich oberhalb des Federelements in einen Bereich unterhalb des Längsträgers des Fahrzeugrahmens verläuft.

Bei Nutzfahrzeugen, wie etwa Lastkraftwagen besteht der tragende Rahmen oftmals aus zwei Längsträgern, die im Abstand zueinander angeordnet sind. Die unter Umständen offenen Seiten der Längsträgerprofile, bspw. von U-Profilen, sind zur Längsmittellinie des Fahrzeugs spiegelbildlich angeordnet.

Bei dieser Rahmenausführung bietet es sich an, Leitungen, die der Energieversorgung oder Signalübertragung dienen, von und zu Aggregaten auf der geschützten Innenseite der Rahmenlängsträger zu verlegen.

Oftmals werden die genannten Leitungen zwischen Aufbau bzw. Fahrerhaus und Rahmen auch gebündelt geführt. Die Bündelung kann mittels Kabelbinden erfolgen und es ist Stand der Technik, dieses Bündel zwischen den Rahmenlängsträgern von und zum Fahrerhaus zu führen.

Das Problem, das sich sowohl bei einer Einzelführung als auch bei einer gebündelten Leitungsführung stellt, besteht darin, dass trotz des aufgrund der wachsenden Anzahl von Anbauteilen am Fahrzeugrahmen und insbesondere am Motor immer geringer werdenden Freiraums zwischen den Rahmenlängsträgern und somit des immer kleiner werdenden Einbauraums für die Leitungsführung, eine sichere und in der Dauerhaltbarkeit verbesserte Leitungsführung ausgestaltet werden muss. Zum allgemeinen Stand der Technik wird noch auf die DE 197 14 212 A1 verwiesen, die ein Verfahren zur Verlegung eines knicksensitiven Transportmediums zwischen einem ersten Punkt und einem zweiten Punkt offenbart, wobei der erste Punkt in einer ersten Ebene liegt und der zweite Punkt in einer zweiten Ebene liegt, die zwei Ebenen verschieden sind und einander in einer Schnittlinie schneiden. Das Transportmedium wird in der ersten Ebene in einem ersten Bogen vom ersten Punkt zur Schnittlinie geführt, dann entlang der Schnittlinie geführt, und in einem zweiten Bogen in der zweiten Ebene von der Schnittlinie zum zweiten Punkt geführt.

Aufgabe der Erfindung ist es, eine Leitungsführung für ein Nutzfahrzeug anzugeben, mit der auch bei geringem zur Verfügung stehenden Einbauraum eine sichere und in ihrer Dauerhaltbarkeit verbesserte Führung elastischer Leitungen zu realisieren ist.

Die Aufgabe wird durch die kennzeichnenden Merkmale des Anspruches 1 gelöst. In diesem Zusammenhang kann es sich bei einer elastischen Leitung sowohl um eine Einzelleitung als auch um ein Bündel von Leitungen, bspw. eine Pneumatikleitung bzw. ein Pneumatikleitungsbündel, ein Hydraulikschlauch und/oder elektrische Leitungen, handeln.

Dadurch, dass die elastischen Leitungen zwischen einem Fahrzeugaufbau, bei dem es sich vorzugsweise um ein Fahrerhaus handelt, und Fahrzeugrahmen außerhalb des Rahmenlängsträgers bzw. der Rahmenlängsträger verlegt sind, hat man ausreichend Bauraum für eine optimierte Leitungsführung zur Verfügung. Weiterhin ist durch den erfindungsgemäß ausgeführten Halter mit Rinne und dessen Anordnung in Bezug auf den Fahrzeugrahmen und die übrigen im vorderen Bereich der Längsträger vorgesehenen Fahrzeugkomponenten eine sichere Führung der elastischen Leitungen unterhalb des Rahmenlängsträgers bzw. der Rahmenlängsträger möglich.

Bei Fahrzeugführern ist eine komfortable Fahrerhauslagerung eine Selbstverständlichkeit und mit entscheidend für die Auswahl eines Fahrzeugs. Für eine komfortable Fahrerhauslagerung benötigt man relativ große Federwege. Dies bedeutet aber auch, dass elastische Leitungen, wie etwa Pneumatikleitungen für die Druckluftversorgung der Bremsen und anderer Nebenverbraucher, die vorzugsweise wenigstens teilweise aus Polyamid gefertigt und zwischen Fahrerhaus und Rahmen angeordnet sind, große Bewegungsfreiheit brauchen.

Für diese erforderliche Bewegungsfreiheit ist der Freiraum zwischen und innerhalb des Rahmens klein und es besteht die Gefahr, dass die elastischen Leitungen engen Biegungen ausgesetzt sind oder dass sogar Scheuerstellen entstehen.

Wenn die Leitung dagegen außerhalb einer der zwei Rahmenlängsträger geführt ist, ist mehr freier Bauraum vorhanden und die Leitungsführung ist auf diese Weise im Hinblick auf eine verbesserte Dauerhaltbarkeit optimiert ausführbar. In diesem Zusammenhang ist auch die Verlegung bzw. Führung einer elastischen Leitung unterhalb eines Rahmenlängsträgers mit Hilfe eines Halters möglich.

Der erfindungsgemäß ausgeführte Halter mit einer entsprechend geformten Rinne sichert somit eine einwandfreie Bewegung der geführten elastischen Leitung bei zwischen Fahrerhaus und Rahmen stattfindenden Relativbewegungen.

Ein weiteren wesentlichen Vorteil bietet der erfindungsgemäß ausgeführte Halter, wenn er bei Fahrzeugen zum Einsatz kommt, die über eine Blattfederung, insbesondere eine Einblatt-Blattfeder, an der Vorderachse verfügen. Sollte es zu einem Bruch der Blattfeder kommen, so wird die elastische Leitung, die sich zwischen dem in diesem Fall als Blattfeder ausgeführten Federelement und dem Rahmenlängsträger befindet, nicht zerquetscht oder durchtrennt, sondern im schlimmsten Fall auf einen luftundurchlässigen Querschnitt, also Querschnitt = 0, zusammengedrückt, so dass es nicht zu einem Leck in der Druckluftleitung und somit auch nicht zu einer Entlüftung der Federspeicherzylinder verbunden mit einem verhältnismäßig unkontrollierbaren Einbremsen des Fahrzeugs kommt.

Der eine Rinne für die elastische Leitung aufweisende Halter ist in einer besonderen Ausführungsform derart ausgestaltet, dass dieser möglicherweise leicht verformt wird, dass beim Bruch der genannten Blattfeder aber die Leitung nur leicht gedrückt wird.

Im Folgenden wird die Erfindung anhand eines Ausführungsbeispiels ohne Beschränkung des allgemeinen Erfindungsgedankens unter Bezugnahme auf die Figuren näher erläutert. Es zeigen:
- Fig. 1: Anordnung zur Leitungsführung mit Halter in einer Seitenansicht;
- Fig. 2: Anordnung zur Leitungsführung mit Halter aus der Sicht II der Fig. 1;
- Fig. 3: Anordnung zur Leitungsführung mit Halter aus einer Schrägansicht;
- Fig. 4 a - d: Leitungshalter in verschiedenen Ansichten.

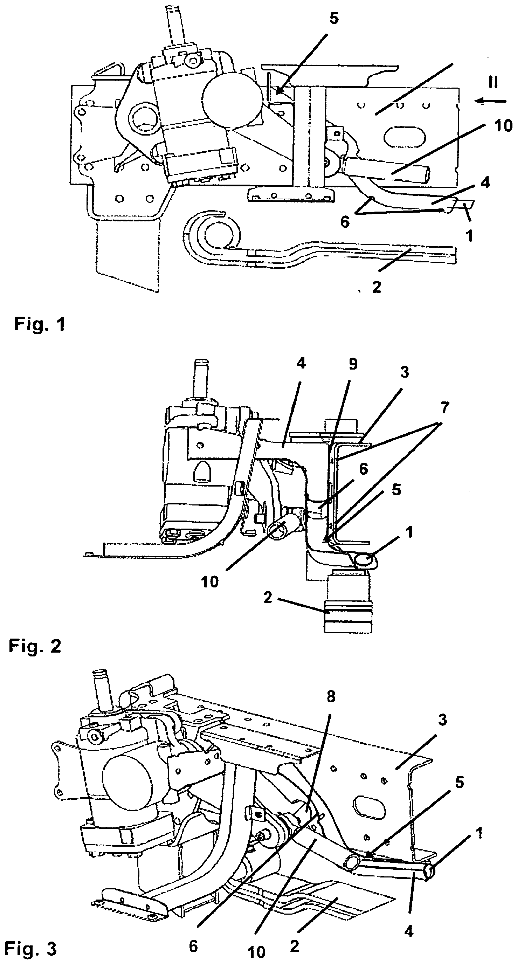

Die Fig. 1 zeigt die Leitungsführung einer elastischen Leitung 1, bei der es sich in diesem Fall um ein Leitungsbündel von Pneumatikleitungen handelt, über die das Bremssystem, bspw. des Vorderachsbremskreises, eines Nutzfahrzeugs mit verdichteter Luft versorgt und gesteuert wird. Aus einem Bereich oberhalb des als Blattfeder ausgeführten Federelements 2 wird die Leitung 1 in einen Bereich unterhalb des Längsträgers 3 des Fahrzeugrahmens geführt. Hierzu ist ein Halter 4 vorgesehen, der über eine Rinne 5 verfügt, in die die elastische Leitung 1 eingelegt und durch die die Leitung 1 geführt ist. Der Halter 4 ist so ausgestaltet, dass die Relativbewegungen zwischen einem an den Längsträgern 3 des Fahrzeugrahmens befestigten Fahrerhaus (aus Gründen der Übersichtlichkeit nicht dargestellt) und den Längsträgern 3 des Fahrzeugrahmens von der elastischen Leitung 1 optimal aufgenommen werden können. Die Leitung 1 wird im Befestigungsbereich 6 vorzugsweise durch Schlauchbinder (nicht dargestellt) im Halter 4 befestigt. Nachdem die Leitung 1 unterhalb des Längsträgers 3 hindurchgeführt worden ist, wird sie schließlich wieder zwischen den Längsträgern 3, also in einem geschützten Bereich, geführt.

Die Fig. 2 zeigt die Leitungsführung einer elastischen Leitung 1 aus der in Fig. 1 dargestellten Sich II. Die Führung der Leitung 1 ist hierbei optimiert und vom Raumangebot nicht eingeschränkt. Hierbei erfolgt die Leitungsführung insbesondere optimiert im Hinblick auf weitere in diesem vorderen Bereich der Längsträger 3 des Fahrzeugrahmens vorgesehenen Fahrzeugkomponenten, wie etwa Lenkgetriebe, Einstiegshalter, Lenkstange und Lenkstockhebel. Unterhalb des Längsträgers 3 und des Halters 4 ist das als Einblatt-Blattfederung ausgeführte Federelement 2 angeordnet. Bei einem Bruch dieser Blattfeder 2, bei dem sich die Blattfeder 2 nach oben bewegt, ist die elastische Leitung 1 vor einer Beschädigung geschützt, da eine mögliche Bruchstelle des Federelements 2 am Halter 4 zum Anliegen kommt. Schlimmstenfalls wird die elastische Leitung 1 bei einem derartigen Federbruch gequetscht. Vorteilhaft hierbei ist, dass eine derartige Quetschung, auch wenn sie wie in dem vorliegenden Beispiel eine Druckluftleitung der Bremsanlage betrifft, noch keine gefährlichen Bremszustände, oder sogar ein Einbremsen der Federspeicherbremszylinder, hervorruft.

Zu einer weiteren Verbesserung der Anschaulichkeit zeigt die Figur 3 die zuvor beschriebene Leitungsführung einer elastischen Druckluftleitung 1, über die das Bremssystem mit verdichteter Luft versorgt und gesteuert wird, in einer Schrägansicht. Im Übrigen sind die bereits zuvor erläuterten Fahrzeugkomponenten dargestellt.

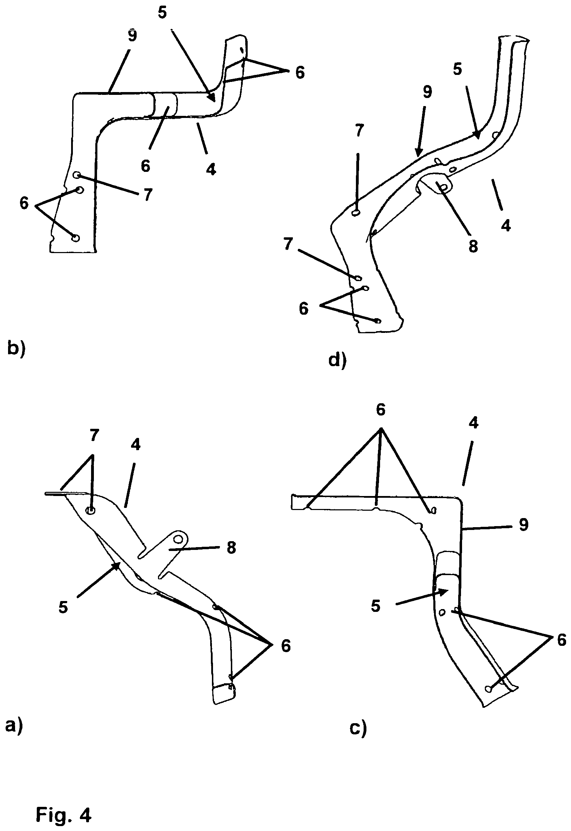

Die Figuren 4 a bis d zeigen einen Halter 4 in verschiedenen Ansichten, mit dem die erfindungsgemäße Führung einer elastischen Leitung 1 realisierbar ist. Der Halter 4 verfügt über eine Rinne 5, in die eine elastische Leitung (in dieser Ansicht nicht dargestellt) eingelegt und mit Hilfe von Befestigungsmitteln, wie etwa Schlauchbindern, befestigt werden kann. Ferner weist der Halter 4 verschiedene Aufnahmestrukturen 7 auf, die in Form von Laschen 8 oder anderen Anschlagflächen 9 mit entsprechenden Bohrungen ausgeführt sind und über die der Halter 4 an einem Fahrzeugrahmen und/oder an am Fahrzeugrahmen vorgesehenen Anbauteilen befestigbar ist. Die in Fig. 4 dargestellte Lasche 8 ist derart ausgeführt, dass der Halter 4 einerseits über diese Lasche 8 am Längsträger eines Fahrzeugrahmens befestigbar ist und andererseits ein ausreichender Freiraum für das Kugelgelenk einer Lenkstange 10 vorhanden ist. An den Enden ist die die Rinne 5 jeweils gerundet, so dass ein Kantenschutz für die elastische Leitung 1 gewährleistet ist.

Die Herstellung des in Figur 4 dargestellten Halters 4 erfolgt, indem durch Laserschneiden eine Blechplatine entsprechender Außenkontur hergestellt und mittels eines Werkzeugs in die gewünschte Form gepresst wird.

### Bezugszeichenliste

- 1: elastische Leitung
- 2: Federelement
- 3: Rahmenlängsträger
- 4: Halter
- 5: Rinne
- 6: Befestigungsbereich
- 7: Aufnahmestruktur
- 8: Lasche
- 9: Anschlagfläche
- 10: Lenkstange

## Patentansprüche

1. Leitungsführung einer elastischen Leitung (1) unterhalb eines Nutzfahrzeugaufbaus, insbesondere Fahrerhaus, der an einem zwei Längsträger (3) aufweisenden Fahrzeugrahmen befestigt ist, wobei an den Längsträgern (3) im Bereich unterhalb des Fahrzeugaufbaus jeweils ein Federelement (2) pro Fahrzeugseite vorgesehen ist und die elastische Leitung (1) aus einem Bereich oberhalb des Federelements (2) in einen Bereich unterhalb des Längsträgers (3) des Fahrzeugrahmens verläuft, **dadurch gekennzeichnet, dass** ein Halter (4) vorgesehen ist, der eine Rinne (5) aufweist, in der die elastische Leitung (1) gelagert ist und die sich aus dem Bereich oberhalb des Federelements (2) durch einen Zwischenraum zwischen dem Federelement (2) und dem Längsträger (3) des Fahrzeugrahmens in den Bereich unterhalb des Längsträgers (3) des Fahrzeugrahmens erstreckt.

2. Leitungsführung nach Anspruch 1, **dadurch gekennzeichnet, dass** die Rinne (5) über einen zumindest teilweise gerundeten Querschnitt verfügt.

3. Leitungsführung nach Anspruch 1 oder 2, **dadurch gekennzeichnet, dass** die Rinne (5) in Längsrichtung zumindest abschnittsweise gekrümmt ist.

4. Leitungsführung nach einem der Ansprüche 1 bis 3, **dadurch gekennzeichnet, dass** die Rinne (5) in Längsrichtung in wenigstens zwei Ebenen verläuft.

5. Leitungsführung nach einem der Ansprüche 1 bis 4, **dadurch gekennzeichnet, dass** der Halter (4) über Befestigungselemente an dem Fahrzeugrahmen und/oder an wenigstens einem am Fahrzeugrahmen vorgesehenen Anbauteil befestigbar ist.

6. Leitungsführung nach einem der Ansprüche 1 bis 5, **dadurch gekennzeichnet, dass** die elastische Leitung (1) als Leitungsbündel ausgeführt ist, das über wenigstens zwei Einzelleitungen verfügt.

7. Leitungsführung nach einem der Ansprüche 1 bis 6, **dadurch gekennzeichnet, dass** die elastische Leitung (1) zumindest teilweise Polyamid aufweist.

8. Leitungsführung nach einem der Ansprüche 1 bis 7, **dadurch gekennzeichnet, dass** die elastische Leitung (1) über zumindest eine Druckluftleitung verfügt.

9. Leitungsführung nach einem der Ansprüche 1 bis 8, **dadurch gekennzeichnet, dass** das Federelement (2) wenigstens eine Blattfeder aufweist.

10. Leitungsführung nach einem der Ansprüche 1 bis 9, **dadurch gekennzeichnet, dass** der Halter (4) eine offene Form hat, die durch Drücken oder Pressen aus einem ebenen Zuschnitt hergestellt worden ist.

## Claims

1. A conduit guide of an elastic conduit (1) below a commercial vehicle body, in particular driver's cab, which is fastened to a vehicle frame having two longitudinal members (3), wherein a respective spring element (2) is provided on the longitudinal members (3) in the region below the vehicle body per vehicle side, and the elastic conduit (1) runs from a region above the spring element (2) into a region below the longitudinal member (3) of the vehicle frame, **characterized in that** a holder (4) is provided which has a groove (5) in which the elastic conduit (1) is mounted and which extends from the region above the spring element (2) through an intermediate space between the spring element (2) and the longitudinal member (3) of the vehicle frame into the region below the longitudinal member (3) of the vehicle frame.

2. The conduit guide according to Claim 1, **characterized in that** the groove (5) has an at least partially rounded cross section.

3. The conduit guide according to Claim 1 or 2, **characterized in that** the groove (5) is curved at least in sections in the longitudinal direction.

4. The conduit guide according to one of Claims 1 to 3, **characterized in that** the groove (5) runs in at least two planes in the longitudinal direction.

5. The conduit guide according to one of Claims 1 to 4, **characterized in that** the holder (4) can be fastened via fastening elements to the vehicle frame and/or to at least one add-on part provided on the vehicle frame.

6. The conduit guide according to one of Claims 1 to 5, **characterized in that** the elastic conduit (1) is designed as a bundle of conduits which has at least two individual conduits.

7. The conduit guide according to one of Claims 1 to 6, **characterized in that** the elastic conduit (1) at least partially contains polyamide.

8. The conduit guide according to one of Claims 1 to 7, **characterized in that** the elastic conduit (1) has at least one compressed air conduit.

9. The conduit guide according to one of Claims 1 to 8, **characterized in that** the spring element (2) has at least one leaf spring.

10. The conduit guide according to one of Claims 1 to 9, **characterized in that** the holder (4) has an open shape which has been produced from a flat blank by compression or pressing.

## Revendications

1. Guide-conduit d'un conduit (1) élastique en dessous d'une structure de véhicule utilitaire, notamment un habitacle fixé au niveau d'un châssis de véhicule comportant deux supports longitudinaux (3), respectivement un élément de ressort (2) par côté de véhicule étant prévu au niveau des supports longitudinaux (3) dans la région en dessous de la structure et le conduit (1) élastique s'étendant d'une région située au-dessus de l'élément de ressort (2) jusque dans une région située en dessous du support longitudinal (3) du châssis de véhicule, **caractérisé en ce qu'**un élément de maintien (4) est prévu et qu'il comporte une rigole (5) dans laquelle le conduit (1) élastique est disposé et qui s'étend hors de la région au-dessus de l'élément de ressort (2) à travers un espace intermédiaire entre l'élément de ressort (2) et le support longitudinal (3) du châssis de véhicule jusque dans la région située en dessous du support longitudinal (3) du châssis de véhicule.

2. Guide-conduit selon la revendication 1, **caractérisé en ce que** la rigole (5) dispose d'une section transversale au moins en partie arrondie.

3. Guide-conduit selon la revendication 1 ou 2, **caractérisé en ce que** la rigole (5) est incurvée au moins sur certaines parties dans la direction longitudinale.

4. Guide-conduit selon l'une quelconque des revendications 1 à 3, **caractérisé en ce que** la rigole (5) s'étend dans la direction longitudinale dans au moins deux plans.

5. Guide-conduit selon l'une quelconque des revendications 1 à 4, **caractérisé en ce que** l'élément de maintien (4) peut être fixé, via des éléments de fixation, au châssis de véhicule et/ou à au moins un composant prévu au niveau du châssis de véhicule.

6. Guide-conduit selon l'une quelconque des revendications 1 à 5, **caractérisé en ce que** le conduit (1) élastique est réalisé sous la forme d'un faisceau de conduits disposant d'au moins deux conduits individuels.

7. Guide-conduit selon l'une quelconque des revendications 1 à 6, **caractérisé en ce que** le conduit (1) élastique comporte au moins en partie du polyamide.

8. Guide-conduit selon l'une quelconque des revendications 1 à 7, **caractérisé en ce que** le conduit (1) élastique dispose d'au moins un conduit d'air comprimé.

9. Guide-conduit selon l'une quelconque des revendications 1 à 8, **caractérisé en ce que** l'élément de ressort (2) comporte au moins un ressort à lames.

10. Guide-conduit selon l'une quelconque des revendications 1 à 9, **caractérisé en ce que** l'élément de maintien (4) a une forme ouverte fabriquée par pressage ou compression à partir d'une coupe plane.
